# DEMANDE DE BREVET EUROPEEN

(11) **EP 4 718 443 A1**
(43) Date de publication de la demande: **01.04.2026**
(21) Numéro de dépôt: 25204580.2
(22) Date de dépôt: 25.09.2025
(51) Int. Cl.: G10K 11/172

(54) **ENSEMBLE CONSTITUANT UN MATÉRIAU ACOUSTIQUEMENT ABSORBANT**

(30) Priorité: 27.09.2024 FR 2410394
(71) Demandeur: AIRBUS OPERATIONS (S.A.S.), 31060 Toulouse (FR)
(72) Inventeur: CARAZO MENDEZ, Arnulfo, 31060 TOULOUSE (FR); ROSSI, Léana, 31060 TOULOUSE (FR); PALANI, Suresh, 31060 TOULOUSE (FR); BOUKHORS, Kevin, 31060 TOULOUSE (FR); ALBERT, Maelle, 31060 TOULOUSE (FR); CAPRILE, Jonathan, 31060 TOULOUSE (FR)
(74) Mandataire: Cabinet Le Guen Maillet

(57) **Abrégé**

L'invention concerne un ensemble (100) constituant un matériau acoustiquement absorbant et comportant une plaque (102) présentant au moins deux premières zones (102a) percées de trous (106) et, pour chaque première zone (102a), une deuxième zone (102b) pleine, où les premières et deuxièmes zones (102a-b) sont disposées de manière alternée le long d'une direction d'alignement (X), et pour chaque première zone (102a) et deuxième zone (102b) associée, une canalisation (108) présentant une première extrémité (108a) qui s'appuie contre la plaque (102) autour de la première zone (102a) et une deuxième extrémité (108b) qui s'appuie contre la plaque (102) autour de la deuxième zone (102b).

Un tel ensemble permet d'obtenir une atténuation large bande et est facile à fabriquer.

## Description

### DOMAINE TECHNIQUE

La présente invention concerne un ensemble constituant un matériau acoustiquement absorbant, ainsi qu'un assemblage ayant pour base ledit ensemble.

### ÉTAT DE LA TECHNIQUE ANTÉRIEURE

Lors de son fonctionnement, un moteur d'aéronef génère du bruit. Ce moteur est logé dans une nacelle et pour atténuer ce bruit, il est connu de mettre en place des assemblages constituant un matériau acoustiquement absorbant autour du moteur dans la structure de la nacelle.

De tels assemblages constituant un matériau acoustiquement absorbant prennent par exemple la forme de structures en nid d'abeilles. Une telle structure en nid d'abeilles comporte deux plaques parallèles dont une est perforée et entre lesquelles sont agencées des cellules hexagonales juxtaposées les unes aux autres.

Bien que d'un point de vue acoustique, de tels assemblages donnent de bons résultats, il est souhaitable de trouver un assemblage constituant un matériau acoustiquement absorbant qui permette d'atténuer une plus large gamme de fréquences acoustiques.

### EXPOSÉ DE L'INVENTION

Un objet de la présente invention est de proposer un ensemble constituant un matériau acoustiquement absorbant qui puisse atténuer plusieurs fréquences acoustiques, et notamment à la fois des basses et hautes fréquences.

À cet effet, est proposé un ensemble constituant un matériau acoustiquement absorbant et comportant :
- une plaque présentant au moins deux premières zones percées de trous et, pour chaque première zone, une deuxième zone pleine, où les premières et deuxièmes zones sont disposées de manière alternée le long d'une direction d'alignement, et
- pour chaque première zone et deuxième zone associée, une canalisation présentant une première extrémité qui s'appuie contre la plaque autour de la première zone et une deuxième extrémité qui s'appuie contre la plaque autour de la deuxième zone, lesdites canalisations étant empilées les unes sur les autres selon une première direction d'empilement perpendiculaire à la direction d'alignement.

Un tel ensemble permet d'obtenir une atténuation large bande.

Avantageusement, au moins une canalisation présente entre sa première extrémité et sa deuxième extrémité, une paroi intermédiaire percée et disposée en travers de ladite au moins une canalisation.

Selon un mode de réalisation particulier, chaque canalisation prend la forme d'un U et les canalisations sont imbriquées les unes dans les autres.

Avantageusement, l'ensemble comporte deux parois d'extrémité et des parois de séparation fixées entre les parois d'extrémité et formant les parois des canalisations.

Selon un mode de réalisation particulier, des canalisations sont délimitées par deux cônes de révolution emboîtés dont les bases sont en appui contre la paroi et les canalisations sont emboîtées les unes dans les autres.

Avantageusement, chaque première zone et chaque deuxième zone prennent la forme d'un demi disque, d'une canalisation à l'autre, les zones sont décalées de 180° et entre la première et la deuxième zone correspondant à une même canalisation, ledit ensemble comporte une paroi de séparation qui s'étend à l'intérieur de la canalisation depuis la paroi sans atteindre le sommet du cône le plus grand constituant la canalisation.

L'invention propose également un assemblage comportant un ensemble selon l'une des variantes précédentes, et où l'assemblage comporte au niveau d'au moins une deuxième extrémité, une canalisation d'échange destinée à transporter un fluide caloporteur, où ladite canalisation d'échange circule le long de la deuxième zone correspondante.

L'invention propose également un assemblage comportant deux ensembles, selon une variante précédente, alignés paroi d'extrémité contre paroi d'extrémité selon une deuxième direction d'empilement perpendiculaire à la direction d'alignement où chaque première zone d'un premier ensemble est alignée avec une première zone du deuxième ensemble selon la deuxième direction d'empilement.

Avantageusement, l'assemblage comporte au moins une canalisation d'échange destinée à transporter un fluide caloporteur traversant les ensembles au niveau d'une deuxième extrémité de chacun d'eux et où ladite canalisation d'échange circule le long des deuxièmes zones correspondantes.

L'invention propose également un assemblage comportant deux ensembles, selon une variante précédente, alignés paroi d'extrémité contre paroi d'extrémité selon une deuxième direction d'empilement perpendiculaire à la direction d'alignement où chaque première zone d'un premier ensemble est alignée avec une deuxième zone du deuxième ensemble selon la deuxième direction d'empilement.

L'invention propose également un assemblage comportant un ensemble selon une variante précédente et un deuxième ensemble constituant un matériau acoustiquement absorbant et comportant:
- une plaque percée de trous,
- une structure en nid d'abeilles qui comporte une pluralité de cages, ladite structure en nid d'abeilles étant accolée à la plaque,
et dans lequel l'ensemble et le deuxième ensemble sont alignés selon la première direction d'empilement perpendiculaire à la direction d'alignement, de sorte que la pluralité de cages s'étend entre la plaque du deuxième ensemble et la plaque de l'ensemble. Avantageusement, chaque cage est alignée sur la première extrémité d'une canalisation et sur la deuxième extrémité d'une canalisation.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue en coupe d'un assemblage utilisant un ensemble constituant un matériau acoustiquement absorbant selon un premier mode de réalisation de l'invention,
[Fig. 2] est une vue en coupe d'un assemblage utilisant un ensemble constituant un matériau acoustiquement absorbant selon une variante du premier mode de réalisation,
[Fig. 3] est une vue en perspective d'un assemblage selon une première variante de réalisation de l'invention,
[Fig. 4] est une vue en perspective d'un assemblage selon une deuxième variante de réalisation de l'invention, et
[Fig. 5] est une vue en coupe d'un assemblage utilisant un ensemble constituant un matériau acoustiquement absorbant selon un deuxième mode de réalisation de l'invention,
[Fig. 6] est une vue en coupe d'un assemblage utilisant un ensemble constituant un matériau acoustiquement absorbant selon un premier mode de réalisation de l'invention, et
[Fig. 7] est une vue en coupe d'un assemblage utilisant un ensemble constituant un matériau acoustiquement absorbant selon une variante du premier mode de réalisation de l'invention.

### EXPOSÉ DÉTAILLÉ DE MODES DE RÉALISATION

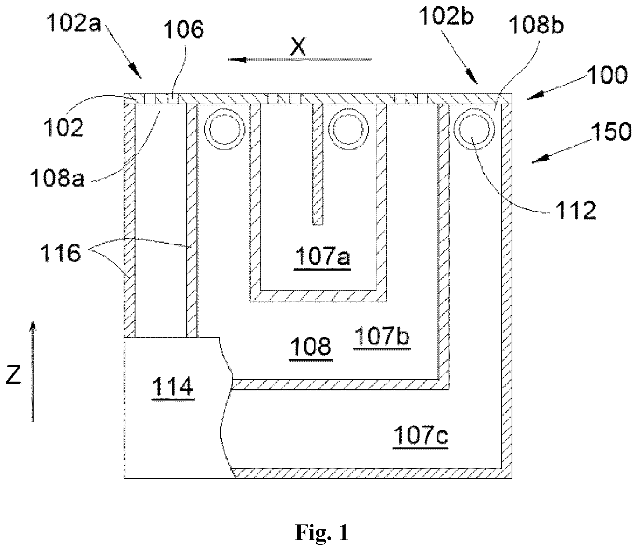

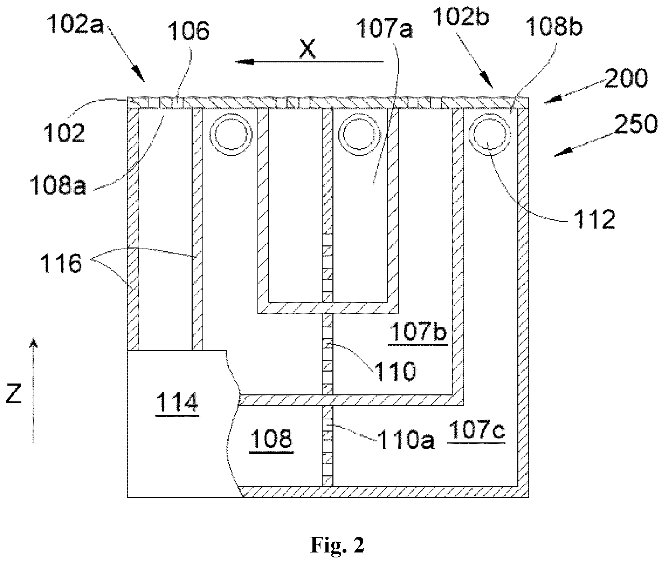

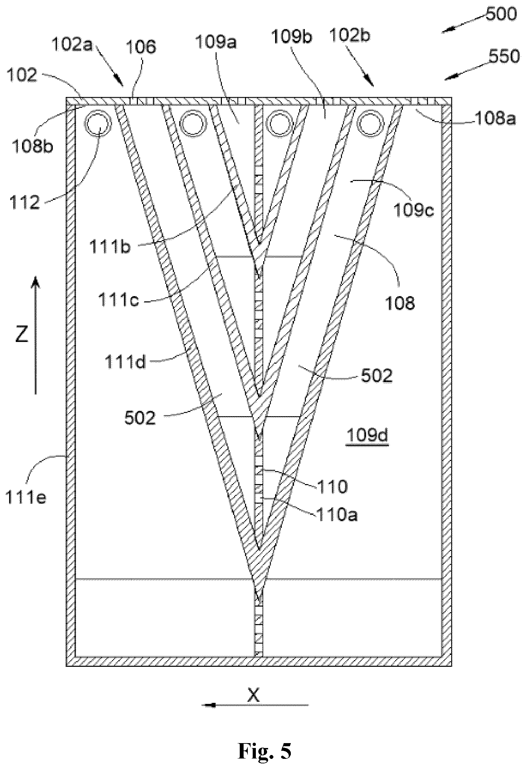

La Fig. 1 montre un ensemble 100 constituant un matériau acoustiquement absorbant selon un premier mode de réalisation de l'invention et la Fig. 5 montre un ensemble 500 constituant un matériau acoustiquement absorbant selon un deuxième mode de réalisation de l'invention. La Fig. 2 montre un ensemble 200 constituant un matériau acoustiquement absorbant selon une variante du premier mode de réalisation.

Les Figs. 1, 2 et 5 montrent également des assemblages 150, 250 et 550 mettant en œuvre les ensembles 100, 200 et 500.

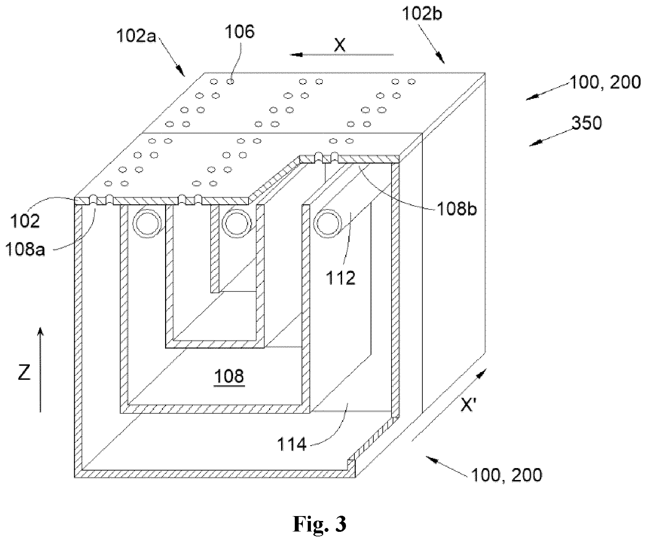

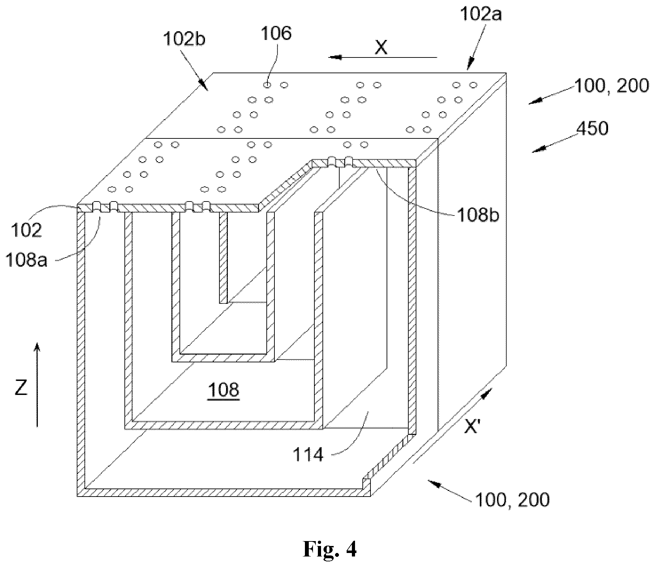

Les Fig. 3 et 4 montrent d'autres assemblages 350 et 450 mettant en œuvre une combinaison des ensembles 100, 200 selon le premier mode de réalisation.

Les différents éléments constituant les ensembles 100, 200 et 500 et les différents assemblages 150, 250, 350, 450 et 550 peuvent être réalisés en différents matériaux comme par exemple des matériaux métalliques comme l'aluminium ou un alliage d'aluminium, ou des matériaux composites. Le mode de fixation des éléments entre eux dépendra également des matériaux utilisés. De tels ensembles 100, 200 et 500 et assemblages 150, 250, 350, 450 et 550 peuvent être mis en place par exemple dans un moteur d'aéronef pour limiter les bruits.

L'ensemble 100, 200, 500 comporte une plaque 102 qui présente au moins deux premières zones 102a qui sont percées de trous 106. Ces premières zones 102a permettent le passage des ondes acoustiques à travers la plaque 102.

Pour chaque première zone 102a, la plaque 102 présente également une deuxième zone 102b qui est pleine, c'est-à-dire non percée de trous et les premières et deuxièmes zones 102a-b sont disposées de manière alternée le long d'une direction d'alignement X. Ainsi, une première zone 102a se retrouve entre deux deuxièmes zones 102b et réciproquement sauf au niveau des bords de la plaque 102.

Pour chaque première zone 102a et deuxième zone 102b associée, l'ensemble 100, 200, 500 comporte une canalisation 108 qui présente une première extrémité 108a et une deuxième extrémité 108b. La première extrémité 108a s'appuie contre la plaque 102 autour de la première zone 102a, c'est-à-dire autour des trous 106, et la deuxième extrémité 108b s'appuie contre la plaque 102 autour de la deuxième zone 102b, c'est-à-dire que cette deuxième extrémité 108b est borgne.

Préférentiellement, la mise en appui de chaque extrémité 108a-b contre la plaque 102 s'effectue de manière étanche acoustiquement.

Les canalisations 108 constituent ainsi des volumes fermés et les ondes qui pénètrent par les trous 106 vont s'atténuer en parcourant les canalisations 108 et en arrivant au niveau de la deuxième extrémité 108b.

La mise en place de zones alternées avec et sans trou 106 permet une meilleure atténuation des ondes acoustiques.

Les canalisations 108 peuvent prendre différentes formes, par exemple, il peut s'agir de canalisations construites de manière indépendante les unes des autres.

Dans le premier mode de réalisation de l'invention présenté sur les Figs. 1 et 2, chaque canalisation 108 prend la forme d'un U et, d'une manière générale, les canalisations 108 sont imbriquées les unes dans les autres pour former un empilement où toutes les extrémités des parois verticales formant les U arrivent en appui contre la plaque 102. Autrement dit, ici les canalisations 108 sont en forme de U et, d'une manière générale, s'empilent les unes sur les autres selon une première direction d'empilement Z.

Ici, il y a trois canalisations référencées 107a-c qui sont mises en œuvre. Il y a ainsi une canalisation intérieure 107a, une canalisation intermédiaire 107b entre les parois de laquelle la canalisation intérieure 107a est arrangée et une canalisation extérieure 107c entre les parois de laquelle la canalisation intermédiaire 107b est arrangée.

Plus spécifiquement, chaque canalisation 108 prend la forme d'un prisme avec des bases en U, qui définit un fond de canalisation.

L'ensemble 100, 200 comporte ainsi deux parois d'extrémité 114 et des parois de séparation 116 qui sont fixées entre les parois d'extrémité 114 et qui sont disposées de manière à former les parois en U des canalisations 108.

Préférentiellement, les deux parois d'extrémité 114 sont parallèles entre elles et les parois de séparation 116 sont planes, mais un arrangement différent est possible.

L'ensemble 100, 200 forme ainsi un bloc globalement rectangulaire avec des parois d'extrémité 114 planes et pleines.

À titre d'exemple non limitatif, la distance selon la direction d'alignement X entre deux parois de séparation 116 délimitant une canalisation 108 est comprise entre 3 mm et 7 mm, et par exemple égale à 4 mm ou 5 mm. L'épaisseur d'une paroi de séparation 116 est de l'ordre de 1 mm. La distance selon la direction d'alignement X entre les deux parois de séparation 116 extrême délimitant toutes deux une canalisation extérieure 107c (largeur de l'assemblage) est comprise entre 25 mm et 35 mm, et par exemple égale à 30 mm. La distance selon la deuxième direction d'empilement X' (mieux vue sur le mode de réalisation de la Fig. 3) entre deux parois d'extrémité 114 de la Fig. 1 (longueur de l'assemblage) est comprise entre 25 mm et 35 mm, et par exemple égale à 30 mm. La distance entre la plaque 102 et le fond de la canalisation extérieure 107c (hauteur de l'assemblage) est comprise entre 20 mm et 45 mm, et par exemple égale à 24 mm ou 40 mm.

Avec cette forme générale de U, chaque canalisation 108 comporte trois branches: deux branches formant les parois latérales du U et une branche formant le fond du U et reliant les parois latérales du U entre elles. La hauteur de chaque branche latérale du U de la canalisation extérieure 107c est comprise entre 20 mm et 45 mm, et par exemple égale à 24 mm ou 40 mm. La hauteur de chaque branche latérale du U de la canalisation intermédiaire 107b est comprise entre 15 mm et 40 mm, et par exemple égale à 19 mm ou 35 mm. La hauteur de chaque branche latérale du U de la canalisation intérieure 107a est comprise entre 10 mm et 35 mm, et par exemple égale à 14 mm ou 30 mm. La longueur effective de la canalisation extérieure 107c, entre la première zone 102a et la deuxième zone 102b, est donc comprise entre 80 mm et 120 mm, et par exemple égale à 100 mm. La longueur effective de la canalisation intermédiaire 107b, entre la première zone 102a et la deuxième zone 102b, est donc comprise entre 60 mm et 100 mm, et par exemple égale à 80 mm. La longueur effective de la canalisation intérieure 107a, entre la première zone 102a et la deuxième zone 102b, est donc comprise entre 30 mm et 70 mm, et par exemple égale à 50 mm.

Chaque canalisation 108 peut ainsi atténuer des ondes acoustiques autour de trois fréquences de résonance, une fréquence de résonance étant atténuée par branche du U de la canalisation 108, en fonction de sa longueur et de sa position. À titre d'exemple non limitatif, la canalisation extérieure 107c de la Fig. 1 peut atténuer des fréquences de résonance comprises entre 800 Hz et 900 Hz, par exemple autour de 850 Hz, entre 1020 Hz et 1120 Hz, par exemple autour de 1070 Hz, et entre 1660 Hz et 1760 Hz, par exemple autour de 1710 Hz. La canalisation intermédiaire 107b de la Fig. 1 peut atténuer des fréquences de résonance comprises entre 2520 Hz et 2620 Hz, par exemple autour de 2570 Hz, entre 3160 Hz et 3260 Hz, par exemple autour de 3210 Hz, et entre 5090 Hz et 5190 Hz, par exemple autour de 5140 Hz. La canalisation intérieure 107a de la Fig. 1 peut atténuer des fréquences de résonance comprises entre 4230 Hz et 4330 Hz, par exemple autour de 4280 Hz, entre 5310 Hz et 5410 Hz, par exemple autour de 5360 Hz, et entre 8520 Hz et 8620 Hz, par exemple autour de 8570 Hz.

Dans le deuxième mode de réalisation de l'invention représenté à la Fig. 5, il y a quatre canalisations référencées 109a-d qui sont mises en œuvre. Chaque canalisation 109a-d prend la forme d'un cône dont la base est en appui contre la plaque 102. Chaque canalisation 109a-c prend ainsi la forme d'un V.

Il y a ainsi une canalisation intérieure 109a, une première canalisation intermédiaire 109b qui est autour de la canalisation intérieure 109a, une deuxième canalisation intermédiaire 109c qui est autour de la première canalisation intermédiaire 109b et une canalisation extérieure 109d qui est autour de la deuxième canalisation intermédiaire 109c.

La canalisation intérieure 109a est délimitée par un premier cône de révolution 111b et une paroi de division 111a qui sépare le volume intérieur du premier cône de révolution 111b en deux sous-volumes depuis la plaque 102 où l'un prolonge la première extrémité 108a et où l'autre prolonge la deuxième extrémité 108b.

La première canalisation intermédiaire 109b est délimitée entre le premier cône de révolution 111b et un deuxième cône de révolution 111c plus grand que le premier cône de révolution 111b qui est emboîté dans le deuxième cône de révolution 111c.

La deuxième canalisation intermédiaire 109c est délimitée entre le deuxième cône de révolution 111c et un troisième cône de révolution 111d plus grand que le deuxième cône de révolution 111c qui est emboîté dans le troisième cône de révolution 111d.

La canalisation extérieure 109d est délimitée entre le troisième cône de révolution 111d et une cuve 111e cylindrique qui est autour du troisième cône de révolution 111d. La cuve 111e s'étend jusqu'à la plaque 102 et enferme le troisième cône de révolution 111d.

Mis à part la canalisation intérieure 109a et la canalisation extérieure 109d, les autres canalisations 109b-c sont délimitées par deux cônes de révolution emboîtés dont les bases sont en appui contre la paroi 102 et, d'une manière générale, les canalisations 108 sont emboîtées les unes dans les autres. Autrement dit, les canalisations 109a-d sont délimitées par des cônes, et ont une forme générale de V, et, d'une manière générale, s'empilent les unes sur les autres selon la première direction d'empilement Z.

Dans le deuxième mode de réalisation de l'invention et selon un mode de réalisation particulier, chaque première zone 102a et chaque deuxième zone 102b prennent la forme d'un demi disque sur la plaque 102.

Les zones 102a-b sont concentriques les unes aux autres et ainsi, d'une canalisation 108 à l'autre, les zones 102a-b sont décalées de 180°. En d'autres termes, pour une canalisation, la première zone 102a est d'un premier côté d'un plan passant par l'axe des cônes et la deuxième zone 102b est d'un deuxième côté du plan. Pour les canalisations 108 voisines, c'est l'inverse, c'est-à-dire que la deuxième zone 102b est du premier côté du plan et la première zone 102a est du deuxième côté du plan.

Pour qu'une onde sonore ne passe pas directement de la première extrémité 108a à la deuxième extrémité 108b, entre la première et la deuxième zones 102a-b correspondant à une même canalisation 108, l'ensemble 500 comporte une paroi de séparation 502 (vue en arrière-plan) qui s'étend à l'intérieur de la canalisation 108 depuis la paroi 102 et vers le sommet du cône le plus grand constituant la canalisation 108 mais sans l'atteindre pour laisser un passage pour l'onde.

La Fig. 2 et la Fig. 5 montrent également la possibilité de mettre en place un septum dans au moins une canalisation 108. C'est-à-dire qu'au moins une canalisation 108 présente entre sa première extrémité 108a et sa deuxième extrémité 108b, une paroi intermédiaire 110, également appelée « septum », qui est percée et disposée en travers de la canalisation 108. La paroi intermédiaire 110 est ainsi traversée par des ouvertures 110a.

Les Figs. 1, 2 et 5 montrent également un assemblage 150, 250, 550 comportant un ensemble 100, 200, 500 selon l'une des variantes présentées ci-dessus où l'assemblage 150, 250, 350 comporte au niveau d'au moins une deuxième extrémité 108b, une canalisation d'échange 112 qui transporte un fluide caloporteur. La canalisation d'échange 112 circule le long de la deuxième zone 102b correspondant à la deuxième extrémité 108b.

Le fluide caloporteur est chaud de manière à permettre le transfert de calories vers la deuxième zone 102b de la plaque 102 pour servir par exemple à dégivrer la plaque 102 par exemple lorsqu'elle est au niveau d'une entrée d'air d'un moteur d'aéronef.

Dans le mode de réalisation de l'invention présenté à la Fig. 1 et à la Fig. 2, les canalisations d'échanges 112 traversent les parois d'extrémité 114.

L'assemblage 350 de la Fig. 3 comporte deux ensembles 100, 200 selon le premier mode de réalisation de l'invention, et ces deux ensembles 100, 200 sont alignés avec la paroi d'extrémité 114 d'un ensemble 100, 200 contre la paroi d'extrémité 114 de l'autre ensemble 100, 200 selon une deuxième direction d'empilement X' qui est perpendiculaire à la direction d'alignement X.

Chaque première zone 102a d'un premier ensemble 100, 200 est alignée selon la deuxième direction d'empilement X' avec une première zone 102a du deuxième ensemble 100, 200. De la même manière, une deuxième zone 102b du premier ensemble 100, 200 est alignée selon la deuxième direction d'empilement X' avec une deuxième zone 102b du deuxième ensemble 100, 200.

Les parois d'extrémité 114 assurent la séparation entre les deux ensembles 100, 200.

Dans le cas où l'assemblage 350 comporte une canalisation d'échange 112 qui transporte un fluide caloporteur. La canalisation d'échange 112 traverse alors les ensembles 100, 200 au niveau d'une deuxième extrémité 108b de chacun d'eux et la canalisation d'échange 112 circule le long desdites deuxièmes zones 102b correspondant aux deuxièmes extrémités 108b et qui sont alignées le long de la deuxième direction d'empilement X'. Un échange de calories peut alors avoir lieu comme précédemment.

A titre d'exemple non limitatif, la distance selon la deuxième direction d'empilement X' entre la paroi d'extrémité 114 de l'ensemble 100 et la paroi d'extrémité 114 de l'ensemble 200 est comprise entre 25 mm et 35 mm, et par exemple égale à 30 mm. Ainsi, chaque ensemble 100, 200 comporte des canalisations 108 de longueur selon la deuxième direction d'empilement X' deux fois inférieure à celles de l'ensemble de la Fig. 1 ou 2. L'assemblage 450 de la Fig. 4 comporte deux ensembles 100, 200 selon le premier mode de réalisation de l'invention, et ces deux ensembles 100, 200 sont alignés avec la paroi d'extrémité 114 d'un ensemble 100, 200 contre la paroi d'extrémité 114 de l'autre ensemble 100, 200 selon une deuxième direction d'empilement X' qui est perpendiculaire à la direction d'alignement X.

Chaque première zone 102a d'un premier ensemble 100, 200 est alignée selon la deuxième direction d'empilement X' avec une deuxième zone 102b du deuxième ensemble 100, 200. De la même manière, une deuxième zone 102b du premier ensemble 100, 200 est alignée selon la deuxième direction d'empilement X' avec une première zone 102a du deuxième ensemble 100, 200.

Les parois d'extrémité 114 assurent la séparation entre les deux ensembles 100, 200.

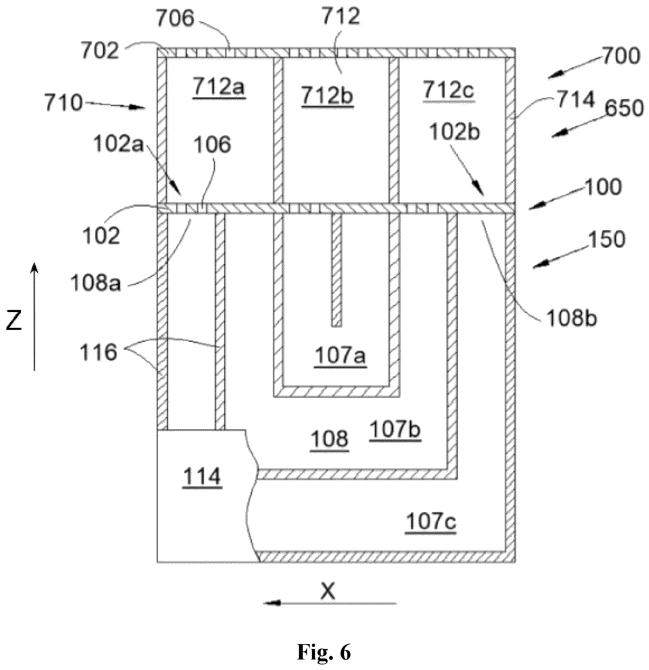

L'assemblage 650 de la Fig. 6 comporte un ensemble 100 selon le premier mode de réalisation de l'invention, et un ensemble 700 constituant un matériau acoustiquement absorbant, ces deux ensembles 100, 700 étant alignés selon la première direction d'empilement Z qui est perpendiculaire à la direction d'alignement X et à la deuxième direction d'empilement X'. La première direction d'empilement Z s'étend selon la hauteur de l'ensemble 100. La première direction d'empilement Z, la direction d'alignement X et la deuxième direction d'empilement X' sont orthogonales deux à deux.

L'ensemble 700 comporte une plaque 702 percée de trous 706 qui la traversent pour permettre le passage des ondes acoustiques. L'ensemble comporte également une structure en nid d'abeilles 710, accolée à la plaque 702, qui comporte une pluralité de cages 712, ici trois cages 712a-c, où chacune est creuse et délimitée par des parois latérales 714. Chaque cage 712 délimite une alvéole hexagonale, mais d'autres formes sont envisageables. Les cages 712 sont ici accolées en ligne les unes à côté des autres et chaque paire de cages 712 voisines présente une paroi 714 commune. Bien sûr, il est également possible que les cages 712 soient disposées en carré. Bien entendu, un ensemble 700 peut comporter plus ou moins de trois cages 712.

L'ensemble 700 est aligné selon la première direction d'empilement Z avec l'ensemble 100 avec la plaque 102 de l'ensemble 100 qui constitue une paroi de fond des cages 712. Les cages 712 s'étendent donc entre la plaque 702 et la plaque 102. L'ensemble 700 est fixé à l'ensemble 100 par collage, soudage, etc. Les trous 106 de la plaque 102 permettent ainsi une liaison acoustique entre l'ensemble 700 et l'ensemble 100. Les ondes acoustiques sont tout d'abord atténuées par l'ensemble 700, en traversant les trous 706 de la plaque 702 et les cages 712, avant d'être atténuées par l'ensemble 100, en traversant les trous 106 de la plaque 102 et les canalisations 108.

Une cage 712 s'étend sur une première zone 102a et sur une deuxième zone 102b de la plaque 102. Les cages 712 sont ainsi deux fois plus larges (selon la direction d'alignement X) que les canalisations 108. Une première cage 712a est ainsi agencée au-dessus de la première extrémité 108a de la canalisation extérieure 107c et au-dessus de la deuxième extrémité 108b de la canalisation intermédiaire 107b. Une deuxième cage 712a est ainsi agencée au-dessus des première et deuxième extrémités 108a, 108b de la canalisation intérieure 107a. Une troisième cage 712c est ainsi agencée au-dessus de la première extrémité 108a de la canalisation intermédiaire 107b et au-dessus de la deuxième extrémité 108b de la canalisation extérieure 107c. Autrement dit, chaque cage 712 est alignée sur la première extrémité 108a d'une canalisation 108 et sur la deuxième extrémité 108b d'une canalisation 108, lesdites première et deuxième extrémités 108a, 108b pouvant appartenir à la même canalisation 108 ou à des canalisations 108 différentes.

A titre d'exemple non limitatif, la distance entre la plaque 702 et la plaque 102 (hauteur de l'ensemble 100 ou hauteur des cages 712) selon la première direction d'empilement Z est comprise entre 10 mm et 20 mm, et par exemple égale à 15 mm.

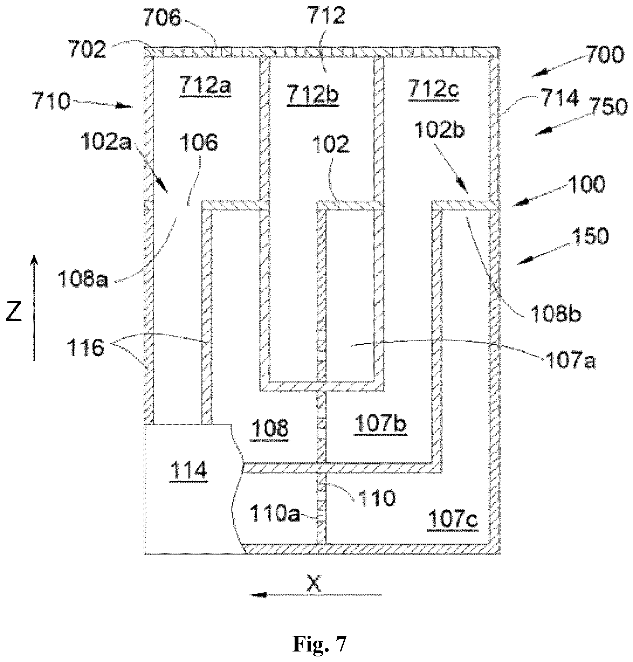

L'assemblage 750 de la Fig. 7 comporte un ensemble 100 selon une variante du premier mode de réalisation de l'invention, et un ensemble 700 selon le mode de réalisation précédemment décrit. L'ensemble 100 comporte une plaque 102 qui présente des premières zones 102a qui sont percées d'un unique trou 106 de la largeur (selon la direction d'alignement X) des canalisations 108. Les ondes acoustiques sont tout d'abord atténuées par l'ensemble 700, en traversant les trous 706 de la plaque 702 et les cages 712, avant d'être atténuées par l'ensemble 100, en rejoignant les canalisations 108 en passant par l'unique trou 106 de la première zone 102a de la plaque 102.

Même si dans des modes de réalisation des Fig. 6 et 7, les canalisations d'échange 112 ne sont pas représentées, elles peuvent être présentes.

De la même manière, même si la paroi intermédiaire 110 percée est représentée uniquement sur le mode de réalisation de la Fig. 7, elle peut être présente sur le mode de réalisation de la Fig. 6.

## Revendications

1. Ensemble (100, 200, 500) constituant un matériau acoustiquement absorbant et comportant :
- une plaque (102) présentant au moins deux premières zones (102a) percées de trous (106) et, pour chaque première zone (102a), une deuxième zone (102b) pleine, où les premières et deuxièmes zones (102a-b) sont disposées de manière alternée le long d'une direction d'alignement (X), et
- pour chaque première zone (102a) et deuxième zone (102b) associée, une canalisation (108) présentant une première extrémité (108a) qui s'appuie contre la plaque (102) autour de la première zone (102a) et une deuxième extrémité (108b) qui s'appuie contre la plaque (102) autour de la deuxième zone (102b), lesdites canalisations (108) étant empilées les unes sur les autres selon une première direction d'empilement (Z) perpendiculaire à la direction d'alignement (X).

2. Ensemble (200, 500) selon la revendication 1, **caractérisé en ce qu'**au moins une canalisation (108) présente entre sa première extrémité (108a) et sa deuxième extrémité (108b), une paroi intermédiaire (110) percée et disposée en travers de ladite au moins une canalisation (108).

3. Ensemble (100, 200) selon l'une des revendications 1 ou 2, **caractérisé en ce que** chaque canalisation (108) prend la forme d'un U et **en ce que** les canalisations (108) sont imbriquées les unes dans les autres.

4. Ensemble (100, 200) selon la revendication 3, **caractérisé en ce qu'**il comporte deux parois d'extrémité (114) et des parois de séparation (116) fixées entre les parois d'extrémité (114) et formant les parois des canalisations (108).

5. Ensemble (500) selon l'une des revendications 1 ou 2, **caractérisé en ce que** des canalisations (108) sont délimitées par deux cônes de révolution emboîtés dont les bases sont en appui contre la paroi (102) et **en ce que** les canalisations (108) sont emboîtées les unes dans les autres.

6. Ensemble (500) selon la revendication 5, **caractérisé en ce que** chaque première zone (102a) et chaque deuxième zone (102b) prennent la forme d'un demi disque, **en ce que** d'une canalisation (108) à l'autre, les zones (102a-b) sont décalées de 180° et **en ce qu'**entre la première et la deuxième zones (102a-b) correspondant à une même canalisation (108), ledit ensemble (500) comporte une paroi de séparation (502) qui s'étend à l'intérieur de la canalisation (108) depuis la paroi (102) sans atteindre le sommet du cône le plus grand constituant la canalisation (108).

7. Assemblage (150, 250, 550) comportant un ensemble (100, 200, 500) selon l'une des revendications précédentes, et où l'assemblage (150, 250, 350) comporte au niveau d'au moins une deuxième extrémité (108b), une canalisation d'échange (112) destinée à transporter un fluide caloporteur, où ladite canalisation d'échange (112) circule le long de la deuxième zone (102b) correspondante.

8. Assemblage (350) comportant deux ensembles (100, 200) selon la revendication 4 alignés paroi d'extrémité (114) contre paroi d'extrémité (114) selon une deuxième direction d'empilement (X') perpendiculaire à la direction d'alignement (X) où chaque première zone (102a) d'un premier ensemble (100, 200) est alignée avec une première zone (102a) du deuxième ensemble (100, 200) selon la deuxième direction d'empilement (X').

9. Assemblage (350) selon la revendication 8, **caractérisé en ce qu'**il comporte au moins une canalisation d'échange (112) destinée à transporter un fluide caloporteur traversant les ensembles (100, 200) au niveau d'une deuxième extrémité (108b) de chacun d'eux et où ladite canalisation d'échange (112) circule le long des deuxièmes zones (102b) correspondantes.

10. Assemblage (450) comportant deux ensembles (100, 200) selon la revendication 4 alignés paroi d'extrémité (114) contre paroi d'extrémité (114) selon une deuxième direction d'empilement (X') perpendiculaire à la direction d'alignement (X) où chaque première zone (102a) d'un premier ensemble (100, 200) est alignée avec une deuxième zone (102b) du deuxième ensemble (100, 200) selon la deuxième direction d'empilement (X').

11. Assemblage (750) comportant un ensemble (100, 200) selon l'une des revendications 1 à 6 et un deuxième ensemble (700) constituant un matériau acoustiquement absorbant et comportant:
- une plaque (702) percée de trous (706),
- une structure en nid d'abeilles (710) qui comporte une pluralité de cages (712), ladite structure en nid d'abeilles (710) étant accolée à la plaque (702),
et dans lequel l'ensemble (100, 200) et le deuxième ensemble (700) sont alignés selon la première direction d'empilement (Z) perpendiculaire à la direction d'alignement (X), de sorte que la pluralité de cages (712) s'étend entre la plaque (702) du deuxième ensemble (700) et la plaque (102) de l'ensemble (100, 200).

12. Assemblage (750) selon la revendication 11, **caractérisé en ce que** chaque cage (712) est alignée sur la première extrémité (108a) d'une canalisation (108) et sur la deuxième extrémité (108b) d'une canalisation (108).
